# EUROPÄISCHE PATENTSCHRIFT

(11) **EP 1 128 993 B1**
(45) Veröffentlichungstag und Bekanntmachung des Hinweises auf die Patenterteilung: **23.04.2003**
(21) Anmeldenummer: 99950605.8
(22) Anmeldetag: 02.10.1999
(51) Int. Cl.: B60R 21/18

(54) **AUFBLASBARER SICHERHEITSGURT FÜR KRAFTFAHRZEUGE**
INFLATABLE SAFETY BELT FOR MOTOR VEHICLES
CEINTURE DE SECURITE GONFLABLE POUR VEHICULES AUTOMOBILES

(30) Priorität: 12.11.1998 DE 19852314
(43) Veröffentlichungstag der Anmeldung: 05.09.2001
(73) Patentinhaber: Autoliv Development AB, 447 83 Vargarda (SE)
(72) Erfinder: SERTL, Hans-Peter, D-95478 Kemnath (DE); MEISTER, Markus, D-81245 München (DE); WERKMEISTER, Klaus, D-85416 Langenbach (DE); KOMPASS, Klaus, D-85298 Scheyern (DE); RITZL, Friedrich, D-82538 Geretsried (DE); TAUBENBERGER, Josef, D-83052 Bruckmühl (DE)
(74) Vertreter: Müller, Karl-Ernst, Dr., Dipl.-Ing.
(86) Internationale Anmeldenummer: EP9907323
(87) Internationale Veröffentlichungsnummer: WO00029260

(56) Entgegenhaltungen:
- EP-A- 0 901 945
- WO-A-88/07947
- WO-A-98/00314
- WO-A-98/51542
- FR-A- 2 200 813
- FR-A- 2 442 058
- US-A- 5 393 091
- US-A- 5 765 869
- PATENT ABSTRACTS OF JAPAN vol. 018, no. 669 (M-1725), 16. Dezember 1994 (1994-12-16) & JP 06 262994 A (TAKATA KK), 20. September 1994 (1994-09-20)

## Beschreibung

Die Erfindung betrifft einen aufblasbaren Sicherheitsgurt für Kraftfahrzeuge, bestehend aus einem Gurtband, das durch eine Bandzunge in einen am Oberkörper eines Insassen anlegbaren Diagonalbereich und in einen am Becken des Insassen anlegbaren Horizontalbereich unterteilt ist und dessen beide Enden mit dem Fahrzeug Verbindbar sind, wobei das Gurtband mit der Bandzunge durch einen Verschluß mit definierter Haltekraft derart verbunden ist daß bei einem Aufprall des Fahrzeugs der Verschluß freigegeben wird, einem am Fahrzeug befestigbaren Gurtschloß, mit dem die Bandzunge lösbar verbindbar ist, einem am Fahrzeug befestigbaren ersten Aufrollautomaten, mit dem der Diagonalbereich des Gurtbandes verbunden ist, einem am Fahrzeug befestigten zweiten Aufrollautomaten, mit dem der Horizontalbereich des Gurtbandes verbunden ist, und einem an dem Diagonalbereich des Gurtbandes befestigten Luftsack, der sich im angelegten Zustand vom Oberkörper des Insassen bis hinter den Kopf erstreckt, wobei der Luftsack aus einem Material besteht, das sich beim Aufblasen in Axialrichtung verkürzt.

Ein derartiger aufblasbarer Sicherheitsgurt ist in der WO 98 00314 A offenbart. Bei diesem bekannten Sicherheitsgurt ist das Gurtband mit der Bandzunge durch eine Reißnaht, einen Schnappverschluß oder einen Knopf verbunden. Wenn ein Unfall eintritt und beim Aufblasen des Luftsackes wird die Verbindung zwischen dem Gurtband und der Bandzunge gelöst, so daß der Horizontalbereich des Gurtbandes straffgezogen werden kann. Dadurch wird die Bewegungsfreiheit des betreffenden Insassen weiter eingeschränkt, und er wird daran gehindert, unter dem Horizontalbereich des Gurtbandes hindurchzutauchen. Bei einer Vollbremsung des Fahrzeugs können ähnlich hohe Verzögerungskräfte auftreten wie bei einem Unfall. Die Verbindung zwischen dem Gurtband und der Bandzunge kann daher gleichfalls gelöst werden. Da diese Verbindung als zerstörbarer Verschluß ausgebildet ist, ist der Löse- oder Trennvorgang nicht reversibel. Wenn das Gurtband gegenüber der Bandzunge nicht mehr fixiert ist, dann ist die Lage des daran befestigten Luftsackes gegenüber dem Insassen nicht mehr definiert Beim Schließen des Sicherheitsgurtes besteht die Möglichkeit, daß von einem der beiden Aufrollautomaten zu wenig und von dem anderen entsprechend zu viel Gurtband aufgewickelt wird, mit der Folge, daß der Luftsack gegenüber dem Insassen zu hoch oder zu tief angeordnet ist. Wenn der Luftsack im geschlossenen Zustand des Sicherheitsgurtes zu hoch angeordnet ist und sich um den Umlenkbeschlag herum erstreckt, dann kann er beim Aufblasen zerstört werden. Der Luftsack wäre daher bei einem Aufprall wirkungslos.

Der Erfindung liegt die Aufgabe zugrunde, den gattungsgemäßen Luftsack dahingehend weiterzubilden, daß unter Beibehaltung der Verschiebbarkeit des Gurtbandes gegenüber der Bandzunge bei Überschreitung einer bestimmten Belastung gewährleistet ist, daß sich der Luftsack im geschlossenen Zustand des Sicherheitsgurtes stets in einer bestimmten Höhenlage befindet.

Erfindungsgemäß wird diese Aufgabe dadurch gelöst, daß der als Klemmverschluß ausgebildete VerSchluß und der erste Aufrollautomat, mit dem der Diagonalbereich des Gurtbandes verbunden ist, elektrisch gesteuert sind, derart, daß zunächst sowohl der erste Aufrollautomat als auch der Klemmverschluß freigegeben sind, daß der erste Aufrollautomat nach Abziehen einer definierten Länge des Gurtbandes gesperrt wird, daß nach dem Einsetzen der Bandzunge in das Gurtschloß der Klemmverschluß gesperrt und der erste Aufrollautomat freigegeben wird.

Durch diese Maßnahmen ist gewährleistet, daß sich der Luftsack, d. h. der aufblasbare Bereich des Sicherheitsgurtes immer in der oberen Stellung befindet, in welcher der Kopf des Insassen optimal geschützt ist. Außerdem ist gewährleistet, daß zur Aufrechterhaltung der maximalen Kopfschutzfunktion der Diagonalbereich des Gurtbandes nur dann aus dem oberen Aufrollautomaten ausgezogen werden kann, wenn sich der Insasse nach Schließen des Sicherheitsgurtes und Sperren des Klemmverschlusses mit seinem Oberkörper nach vorne bewegt. Sobald der Insasse wieder seine Ruheposition erreicht hat, zieht der obere Aufrollautomat die Lose aus dem Diagonalbereich des Gurtbanden. Es bleibt daher die Komfortfunktion eines herkömmlichen Dreipunkt-Gurtsystems erhalten.

Im abgelegten Zustand des Sicherheitsgurtes wird der Horizontalbereich des Gurtbandes von dem unteren Aufrollautomaten aufgewickelt, so daß die Bandzunge auf der Sitzfläche zu liegen kommt und der mit dem Luftsack versehene Bereich des Gurtbandes vertikal neben dem Sitz an der Innenseite des Fahrzeugs anliegt.

Um auch einen nicht angeschnallten Insassen bei einem Seitenaufprall des Fahrzeugs zu schützen, ist vorgesehen, daß der mit dem Luftsack verbundene Gasgenerator bei einem Aufprall des Fahrzeugs auch dann aktiviert wird, wenn die Bandzunge nicht in das Gurtschloß eingesetzt ist. Bei einem Aufprall des Fahrzeugs wird der Luftsack von dem Gasgenerator aufgeblasen, so daß auch ein nicht angeschnallter Insasse im Kopfbereich geschützt ist.

Bei Kleinkindern ist das herkömmliche Dreipunkt-Gurtsystem wegen der geringen Körpergröße nicht anwendbar. Die eigentliche Sicherheitsfunktion wird deshalb von einem besonders ausgebildeten Kindersitz übernommen, der mit dem Sicherheitsgurt lediglich gegenüber dem Sitz fixiert wird. Damit der erfinderische Sicherheitsgurt auch in Verbindung mit einem solchen Kindersitz verwendet werden kann, ist gemäß einer vorteilhaften Weiterbildung ein Kindersitz-Erkennungssystem vorgesehen, das bei erkanntem Kindersitz den oberen Aufrollautomaten sperrt und eine Auslösung des Gasgenerators verhindert.

Weiterbildungen der Erfindung, welche die Gaszufuhr vom Gasgenerator zum Luftsack betreffen, sind in den Unteransprüchen angegeben.

Einige Ausführungsbeispiele der Erfindung sind in der Zeichnung dargestellt und werden im folgenden näher erläutert. Es zeigt:
Fig. 1 eine perspektivische Darstellung des Innenraums eines Personenkraftwagens,
Fig. 2 eine schematische Seitenansicht eines Sitzes mit zugeordnetem Sicherheitsgurt und beweglich angeordnetem Gasgenerator,
Fig. 3 eine Abwandlung von Fig. 2,
Fig. 4 eine Seitenansicht eines Sitzes mit zugeordnetem Sicherheitsgurt und ortsfest angeordnetem Gasgenerator,
Fig. 5 eine Abwandlung von Fig. 4,
Fig. 6 eine schematische Seitenansicht eines Sitzes mit zugeordnetem Sicherheitsgurt und beweglich angeordnetem Gasgenerator,
Fig. 7 eine Abwandlung von Fig. 6,
Fig. 8 eine Abwandlung von Fig. 5,
Fig. 9 eine weitere Abwandlung von Fig. 6,
Fig. 10a bis 10d Querschnitte durch den Sicherheitsgurt, den Gaszuführschlauch bzw. eine Umlenkrolle,
Fig. 11a und 11b eine schematische Seitenansicht bzw. eine Vorderansicht eines Sitzes mit zugeordnetem Sicherheitsgurt, wobei der Luftsack über einen gesonderten Gaszuführschlauch mit dem ortsfesten Gasgenerator verbunden ist.
Fig. 12 einen Klappmechanismus zum Nachführen des Gaszuführschlauches,
Fig. 13 eine Trommel zum Aufwickeln des Gaszuführschlauches,
Fig. 14a und 14b schematische Darstellungen eines längenveränderlichen Gaszuführschlauches.
Fig. 15 eine schematische Seitenansicht eines Sitzes mit zugeordnetem Sicherheitsgurt, bei dem der Luftsack über das Gurtschloß aufgeblasen wird,
Fig. 16 eine schematische Darstellung des zur Gaszufuhr ausgebildeten Gurtschlosses,
Fig. 17 eine Draufsicht auf das Gurtschloß nach Fig. 16,
Fig. 18 einen Schnitt nach der Linie A-A in Fig. 17,
Fig. 19 eine schematische Seitenansicht eines Sitzes mit zugeordnetem Sicherheitsgurt, wobei der Gasgenerator in den Luftsack integriert ist,
Fig. 20 einen Querschnitt durch den Sicherheitsgurt und den zugeordneten Luftsack,
Fig. 21 eine schematische Seitenansicht eines Sitzes mit zugeordnetem Sicherheitsgurt und einem den Gaszuführschlauch ummantelnden Faltenbalg und
Fig. 22 einen schematischen Längsschnitt durch den Luftsack und den mit diesem einstückig verbundenen Gaszuführschlauch.

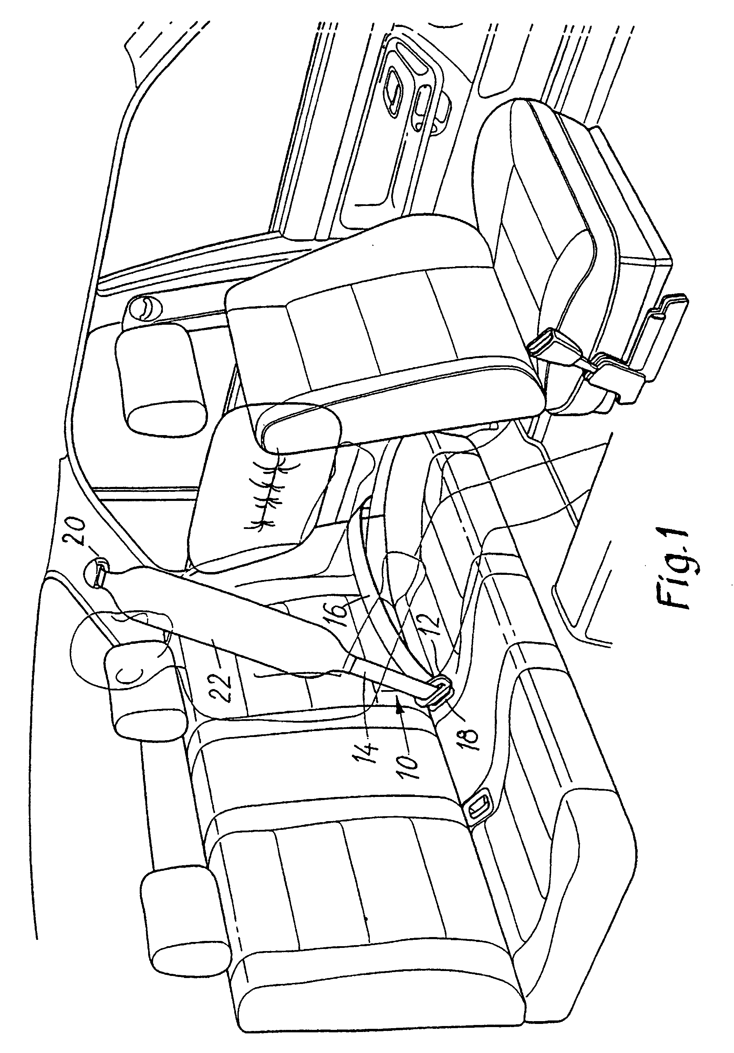

In Fig. 1 der Zeichnung ist der Einfachheit halber nur der dem linken Rücksitz zugeordnete Sicherheitsgurt gezeigt. Dieser Sicherheitsgurt besteht aus einem Gurtband 10, das in bekannter Weise durch eine Bandzunge 12 in einen am Oberkörper eines Insassen anliegenden Diagonalbereich 14 und in einen am Becken des Insassen anliegenden Horizontalbereich 16 unterteilt ist. Die Bandzunge 12 kann in bekannter Weise in ein am Fahrzeug befestigtes Gurtschloß 18 eingesetzt und mit diesem lösbar verriegelt werden. Dem Führungsschlitz der Bandzunge 12 ist ein (nicht gezeigter) Klemmverschluß zugeordnet, so daß das Gurtband 10 normalerweise an einer Relativbewegung gegenüber der Bandzunge 12 gehindert ist und sich erst nach Überschreiten einer bestimmten Axialkraft gegenüber der Bandzunge bewegen kann. Das freie Ende des Horizontalbereichs 16 des Gurtbandes 10 ist mit einem (nicht gezeigten) herkömmlichen unteren Aufrollautomaten verbunden, der am Fahrzeug befestigt ist. Der Diagonalbereich 14 des Gurtbandes 10 ist um einen Bandumlenkbeschlag 20 herumgeführt und mit einem (nicht gezeigten) oberen herkömmlichen Aufrollautomaten verbunden. Der Bandumlenkbeschlag 20 ist über dem Kopf eines Insassen von durchschnittlicher Größe angeordnet. Ein schlauchförmiger Luftsack 22 ist mit seinen beiden Enden an dem Diagonalbereich 14 des Gurtbandes 10 befestigt und über eine (nicht gezeigte) Gasleitung mit einem (gleichfalls nicht gezeigten) Gasgenerator verbunden. Der Luftsack 22 besteht aus einem schlauchförmigen Gewebe, dessen Kett- und Schußfäden näherungsweise diagonal zur Längsachse des Luftsackes 22 verlaufen. Durch diese Maßnahme wird erreicht, daß sich der Luftsack 22 beim Aufblasen in Axialrichtung verkürzt, während sein Durchmesser zunimmt. Bei dem gezeigten Ausführungsbeispiel ist das Gurtband 10 durch den Luftsack 22 unterbrochen, es könnte aber auch durchgehend ausgebildet sein.

Wenn der Sicherheitsgurt nicht benötigt wird und die Bandzunge 12 vom Gurtschloß 18 getrennt ist, dann wird das Gurtband 10 von dem oberen und dem unteren Aufrollautomaten aufgewickelt. Dadurch ist eine definierte Ruhelage des Luftsackes 22 gewährleistet. Wenn ein Insasse den Sicherheitsgurt benutzen will, dann erfaßt er die Bandzunge 12 und zieht diese über sein Becken hinweg zu dem Gurtschloß 18 hin , um sie mit diesem zu verriegeln. Bei diesem Vorgang wird das Gurtband 10 lediglich von dem unteren Aufrollautomaten abgezogen. Wenn sich der Insasse nach erfolgtem Anschnallen jedoch mit dem Oberkörper nach vorne bewegen will, dann ist dies ohne weiteres möglich, weil die erforderliche Länge des Gurtbandes 10 von dem oberen Aufrollautomaten abgezogen werden kann. Wenn der Insasse sodann in seine Normalstellung zurückkehrt dann wird das Gurtband 10 von dem oberen Aufrollautomaten aufgewickelt, bis der Luftsack 22 wieder seine in Fig. 1 gezeigte Position einnimmt.

Bei einem Aufprall des Fahrzeugs wird der Gasgenerator ausgelöst, um den Luftsack 22 aufzublasen, und die beiden Aufrollautomaten werden in bekannter Weise gegen ein Abwickeln des Gurtbandes gesperrt. Wie in Fig. 1 gezeigt, erstreckt sich der Luftsack 22 über die Brust des Insassen bis nach oben über den Kopfbereich. Der Kopf des Insassen wird deshalb durch den Luftsack 22 gegen einen Seitenaufprall optimal geschützt. Ein zusätzlicher Seitenairbag zum Schutz des Kopfes ist daher entbehrlich. Da sich der Luftsack 22 beim Aufblasen in Axialrichtung verkürzt, wird in dem Diagonalbereich 14 des Gurtbandes 10 eine Axialkraft aufgebaut, welche die Haltekraft des der Bandzunge 12 zugeordneten Klemmverschlusses übersteigt. Das Gurtband 10 beginnt daher gegenüber der Bandzunge 12 nach oben zu wandern, bis der Horizontalbereich 16 absolut fest an dem Beckenbereich des Insassen anliegt und keinerlei Lose mehr aufweist. Der Insasse ist daher von dem Diagonalbereich 14 und von dem Horizontalbereich 16 des Gurtbandes 10 an dem Sitz stabil festgehalten.

Diese Vorgänge laufen in einer sehr kurzen Zeit ab, noch bevor auf den Insassen eine größere Massenträgheitskraft einwirkt. Sobald der Insasse beginnt, sich unter der Massenträgheitskraft nach vorne zu bewegen, stützt er sich im Brustbereich an dem Luftsack 22 ab. Unter dieser Abstützkraft kann der Luftsack 22 seine Form verändern, so daß seine Länge wieder zunimmt. Durch diese Längenzunahme des Luftsackes 22 wird der Oberkörper sanfter abgefangen bzw. die Verzögerungskraft wird verringert.

Der beschriebene Sicherheitsgurt zeichnet sich einerseits durch eine hohe Betriebssicherheit aus, weil gewährleistet ist, daß sich der Luftsack 22 stets in einer für den Kopfschutz optimalen Lage befindet, und er zeichnet sich andererseits durch eine große Bequemlichkeit aus, weil der angeschnallte Insasse seinen Oberkörper im Bedarfsfall von der Lehne weg nach vorne bewegen kann.

Abweichend von dem gezeigten Ausführungsbeispiel kann der Bandumlenkbeschlag und der obere Aufrollautomat auch in den Sitz integriert sein.

Bei dem vorstehend beschriebenen aufblasbaren Sicherheitsgurt muß der den Gasgenerator mit dem Luftsack verbindende Gaszuführschlauch ausreichend lang sein, damit er der Vorwärtsbewegung eines Insassen folgen kann. Im Gegensatz zum Sicherheitsgurt soll der Gaszuführschlauch in der Parkstellung jedoch nicht aufgewickelt werden, weil dies einen sehr großen Durchmesser der Aufwickeltrommel erfordern würde. Nachfolgend werden einige Ausführungsbeispiele für die Verbindung des Gasgenerators mit dem Luftsack erläutert.

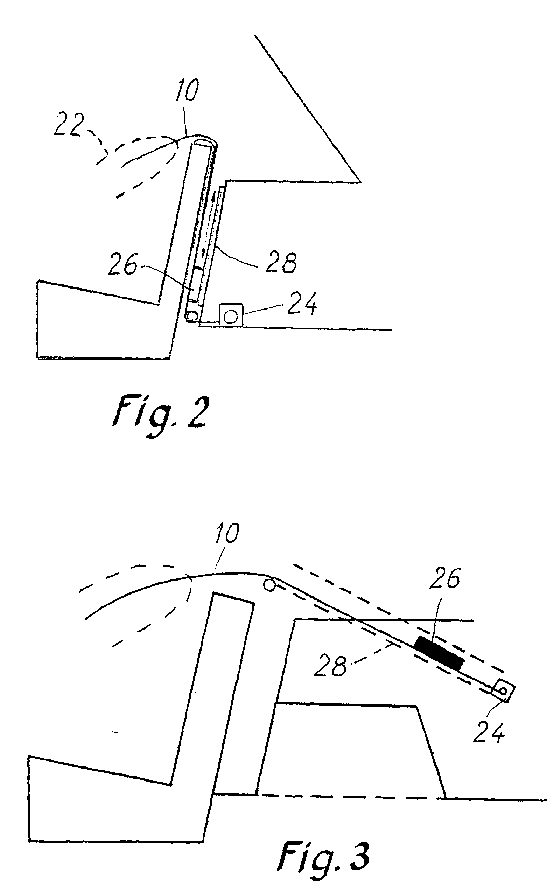

Fig. 2 zeigt eine schematische Seitenansicht eines Sitzes mit zugeordnetem Sicherheitsgurt, bei dem die Gaszufuhr zu dem Luftsack von oben her erfolgt. Ein (nicht gezeigter) Gaszuführschlauch ist mit dem Gurtband 10 integriert. Das Gurtband 10 erstreckt sich hinter der Sitzlehne nach unten, und es ist um eine Rolle nach hinten zu einem Aufrollautomaten 24 umgelenkt. Ein mit dem Gaszuführschlauch verbundener Gasgenerator 26 ist an dem Gurtband 10 befestigt, beispielsweise durch Vernähen. Hinter der Sitzlehne ist eine Führungsschiene 28 angebracht, auf welcher der Gasgenerator 26 in Pfeilrichtung verschiebbar geführt ist. Fig. 2 zeigt den Normalzustand, bei dem das Gurtband auf den Aufrollautomaten 24 aufgerollt ist. Wenn sich der (nicht gezeigte) Insasse nach vorne bewegt, dann wird das Gurtband 10 vom Aufrollautomaten 24 abgezogen, wobei sich der Gasgenerator 26 längs der Führungsschiene 28 nach oben bewegt. Es ist gewährleistet, daß nur das Gurtband 10, nicht aber der den Gasgenerator 26 mit dem Luftsack 22 verbindende Gaszuführschlauch auf den Aufrollautomaten 24 aufgewickelt wird.

Fig. 3 zeigt eine Abwandlung von Fig. 2, bei welcher die Führungsschiene 28 und der dem Diagonalbereich des Gurtbandes 10 zugeordnete Aufrollautomat 24 hinter der Lehne des Rücksitzes auf der Hutablage oder im Kofferraum angeordnet sind.

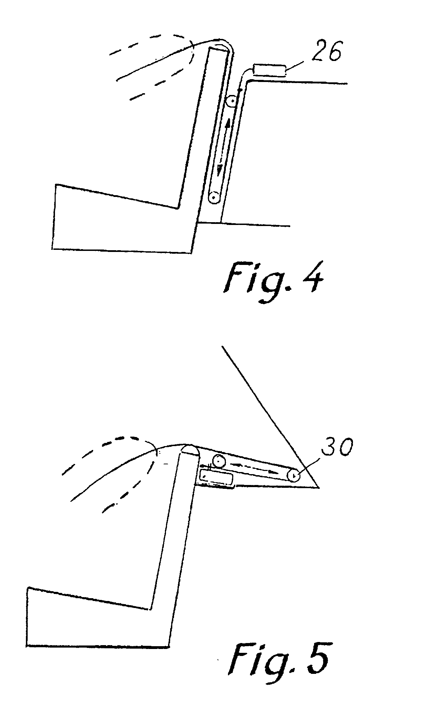

Bei der in Fig. 4 gezeigten Ausführungsform ist der Gaszuführschlauch ebenfalls in das Gurtband 10 integriert Das obere Ende des Diagonalbereichs des Gurtbandes 10 ist an dem mit dem Fahrzeug ortsfest verbundenen Gasgenerator 26 befestigt. Das Gurtband 10 erstreckt sich hinter der Sitzlehne nach unten, und es ist um eine Spannrolle 30 herumgeführt. Die beiden Enden der Spannrolle 30 sind in (nicht gezeigten) Führungsschienen geführt. Die Spannrolle 30 kann das Gurtband 10 unter ihrem Eigengewicht gespannt halten, oder es kann ihr zusätzlich eine Feder zugeordnet sein. Die Spannrolle 30 ist in einer unteren Normalstellung und in einer oberen Stellung gezeigt, die sie einnimmt, wenn sich der Insasse nach vorne beugt. Bei dieser Ausführungsform ist die abziehbare Gurtlänge doppelt so lange, wie der Verschiebeweg der Spannrolle 30.

Die in Fig. 5 gezeigte Abwandlung unterscheidet sich von Fig. 4 dadurch, daß die Spannrolle 30 näherungsweise horizontal verschiebbar geführt ist. Die Spannrolle 30 ist in einer hinteren Normalstellung und in einer vorderen Stellung gezeigt, die sie einnimmt, wenn sich der Insasse nach vorne beugt und das Gurtband 10 abzieht. Die Ausführungsform nach Fig. 5 eignet sich insbesondere für die Rücksitze eines Fahrzeuges.

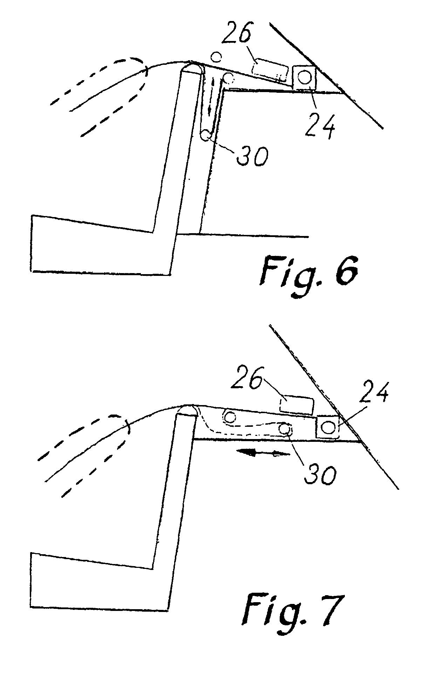

Die in Fig. 6 gezeigte Ausführungsform stellt gewissermaßen eine Kombination der Ausführungsformen nach den Fig. 3 und 4 dar. Die Spannrolle 30 hat hier nur die Funktion, das Gurtband 10 in die Parkposition zu bringen, nach dem der Insasse das Gurtschloß geöffnet hat. Wenn der Insasse den Sicherheitsgurt anlegt und dieser von dem oberen Aufrollautomaten 24 gespannt wird, dann nimmt die Spannrolle 30 die obere Stellung ein. Im Gegensatz zu der Ausführungsform nach Fig. 4 braucht die Spannrolle 30 bei dieser Ausführungsform nicht lasttragend ausgebildet zu sein.

Bei der Abwandlung nach Fig. 7 kann sich die Spannrolle 30 horizontal bewegen. Mit strichpunktieren Linien ist der Verlauf des Gurtbandes 10 in der Parkstellung gezeigt. Diese Ausführungsform eignet sich besonders für die Rücksitze eines Fahrzeuges.

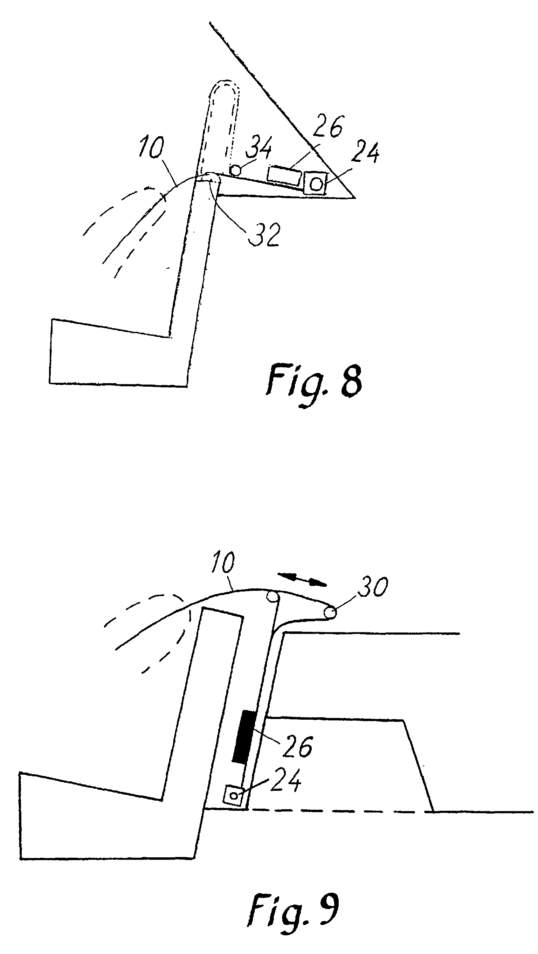

Bei der in Fig. 8 gezeigten Abwandlung von Fig. 6 übernimmt der Bandumlenkbeschlag 32 die Funktion einer Spannrolle. Der Bandumlenkbeschlag 32 kann gegenüber einer Umlenkrolle 34 mit einem (nicht gezeigten) Mechanismus nach oben bewegt werden, um das Gurtband 10 in die Parkposition zu bringen.

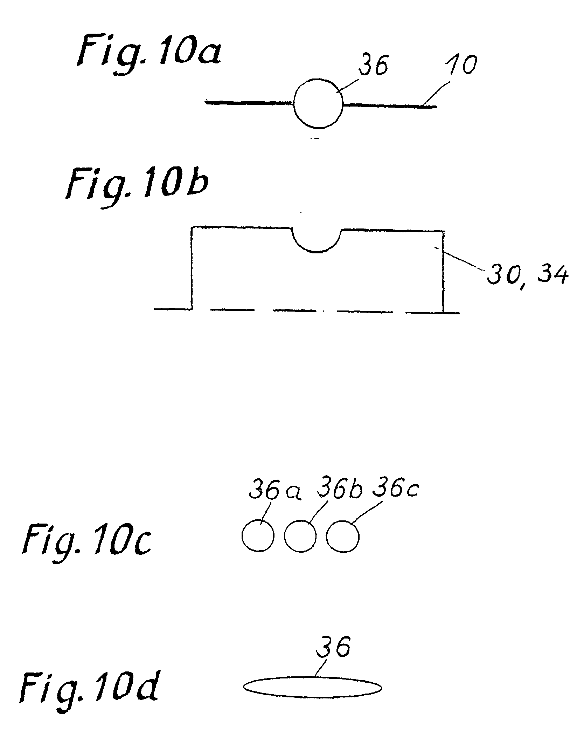

In Fig. 9 ist eine Abwandlung der Ausführungsform nach Fig. 2 gezeigt, bei der das Gurtband 10 im oberen Bereich um eine Spannrolle 30 herumgeführt ist. Genauer gesagt auf der Hutablage ist ein Lagerbock angeordnet, in dem die Spannrolle 30 zur Speicherung des Gurtbandes 10 horizontal nach hinten verschiebbar ist. Wenn ein Insasse den Sicherheitsgurt anlegt und das Gurtband 10 vom Aufrollautomaten 24 abzieht, dann wird die Spannrolle 30 durch einen (nicht gezeigten) Mechanismus in die vordere Stellung bewegt. Nach erfolgtem Anschnallen wird das Gurtband 10 vom oberen Aufrollautomaten 24 aufgewickelt, woraufhin die Spannrolle 30 in die hintere Stellung bewegt wird. Bei dieser Ausführungsform läßt sich ein lasttragender Speicher und eine große Umlenkung des Gurtbandes leicht realisieren.

Bei den vorstehend anhand der Fig. 2 bis 9 erläuterten Ausführungsbeispielen wird das Gurtband um eine Rolle 30 bzw. 34 umgelenkt und dabei mit einer verhältnismäßig großen Kraft an die Rolle angedrückt. Wenn der mit dem Gurtband 10 integrierte Gaszuführschlauch in Bezug auf das Gurtband außermittig angeordnet ist, dann besteht die Möglichkeit, daß der Gaszuführschlauch im Belastungsfall flachgedrückt wird. Um diese Möglichkeit zu vermeiden, ist gemäß Fig. 10a vorgesehen, daß der Gaszuführschlauch 36 in die neutrale Faser des Gurtbandes 10 gelegt ist, und daß gemäß Fig. 10b in der Rolle 30 bzw. 34 eine den Gaszuführschlauch aufnehmende Umfangsnut 38 ausgebildet ist.

Damit eine Beschädigung des Gaszuführschlauches infolge der Verformung vermieden wird, sollte sein Umlenkradius mindestens das 5-fache seines Durchmessers betragen. Um einen möglichst geringen Umlenkradius des Gaszuführschlauches bei gleichem Schlauchquerschnitt zu erreichen, kann der Gaszuführschlauch gemäß Fig. 10c in drei nebeneinander angeordnete Schläuche 36a, 36b, 36c von kleinerem Durchmesser aufgeteilt sein. Wie in Fig. 10d gezeigt, ist es aber auch möglich, den Gaszuführschlauch 36 im Querschnitt abzuflachen, beispielsweise ellipsenförmig auszubilden.

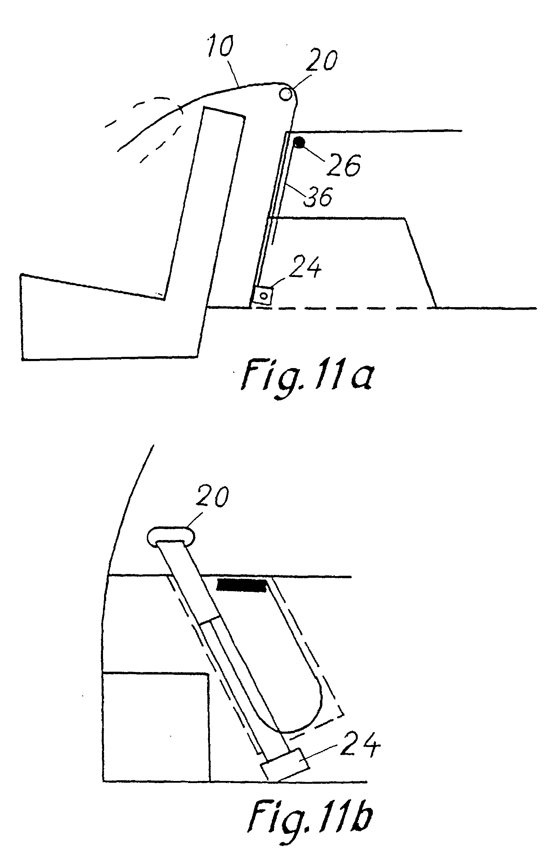

Bei der in den Fig. 11a und 11b gezeigten Ausführungsform ist der Gaszuführschlauch 36 getrennt vom Gurtband 10 ausgebildet und mit einem stationär angeordneten Gasgenerator 26 verbunden. Damit das Gurtband 10 in die Parkposition gebracht werden kann, muß der Abstand zwischen dem Aufrollautomaten 24 und dem Bandumlenkbeschlag 20 ca. 580 mm betragen. Der Gasgenerator 26 ist in geringem Abstand unterhalb des Bandumlenkbeschlags 20 am Fahrzeug befestigt, und der Gaszuführschlauch 36 erstreckt sich U-förmig zwischen dem Gasgenerator 26 und dem Bandumlenkbeschlag 20. Der Aufrollautomat 24 ist bis zum Einsetzen der Bandzunge in das Gurtschloß gesperrt und wird nach dem Angurten freigegeben. Wenn das Gurtband 10 abgezogen wird, dann nimmt es den Gaszuführschlauch 36 mit, wobei sich die abgezogenen Länge auf die beiden Schenkel des "U" verteilt.

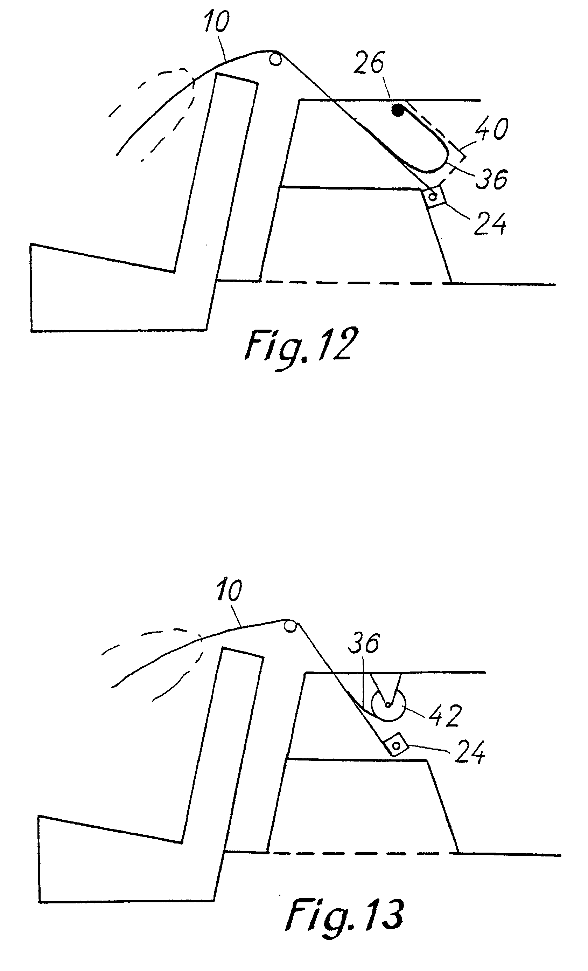

Bei der in Fig. 12 gezeigten Ausführungsform ist der Gaszuführschlauch 36 im oberen Bereich ebenfalls getrennt von dem Gurtband 10 ausgebildet. Der Gaszuführschlauch 36 wird über einen von einem Rohr 40 gebildeten Klappmechanismus nachgeführt.

Bei der in Fig. 13 gezeigten Ausführungsform ist der vom Gurtband 10 getrennt ausgebildete Gaszuführschlauch 36 auf eine am Fahrzeug befestigte Trommel 42 aufgewickelt. Diese Ausführungsform ermöglicht bei einem einfachen Aufbau eine große Vorverlagerung des Oberkörpers eines Insassen.

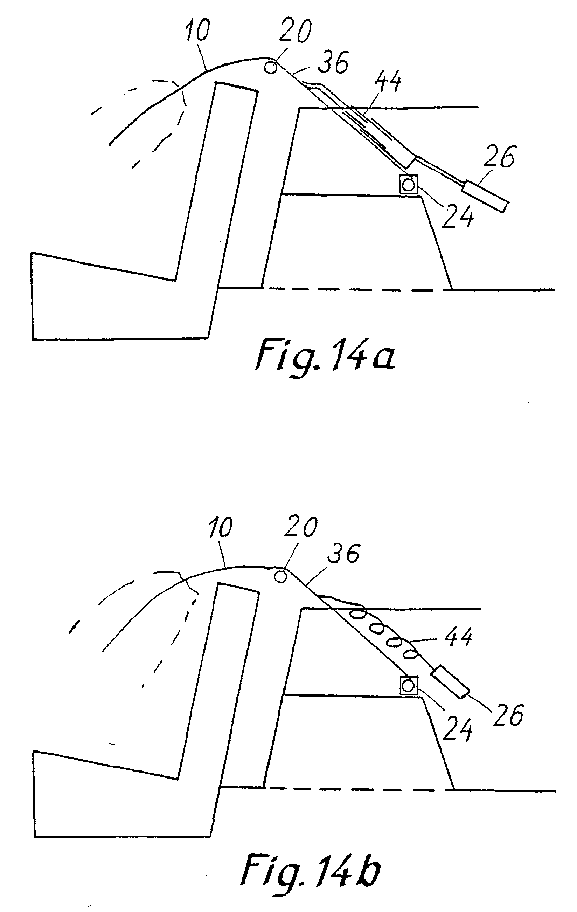

Bei den in den Fig. 14a und 14b gezeigten Abwandlungen wird die zum Angurten und zur Vorverlagerung eines Insassen notwendige Nachführung des Gaszuführschlauches 36 durch eine Längenänderung desselben erreicht. Zu diesem Zweck kann der Gaszuführschlauch 36 in dem Bereich zwischen dem Bandumlenkbeschlag 20 und dem Gasgenerator 26 als Teleskoprohr 44 oder als Spiralschlauch 46 ausgebildet sein.

Diese Ausführungsform zeichnet sich durch einen einfachen Aufbau und durch eine geringe träge Masse im Gurtsystem aus. Außerdem wirkt der Spiralschlauch 26 wie eine Rückzugfeder und unterstützt den Aufrollvorgang des Aufrollautomaten 24.

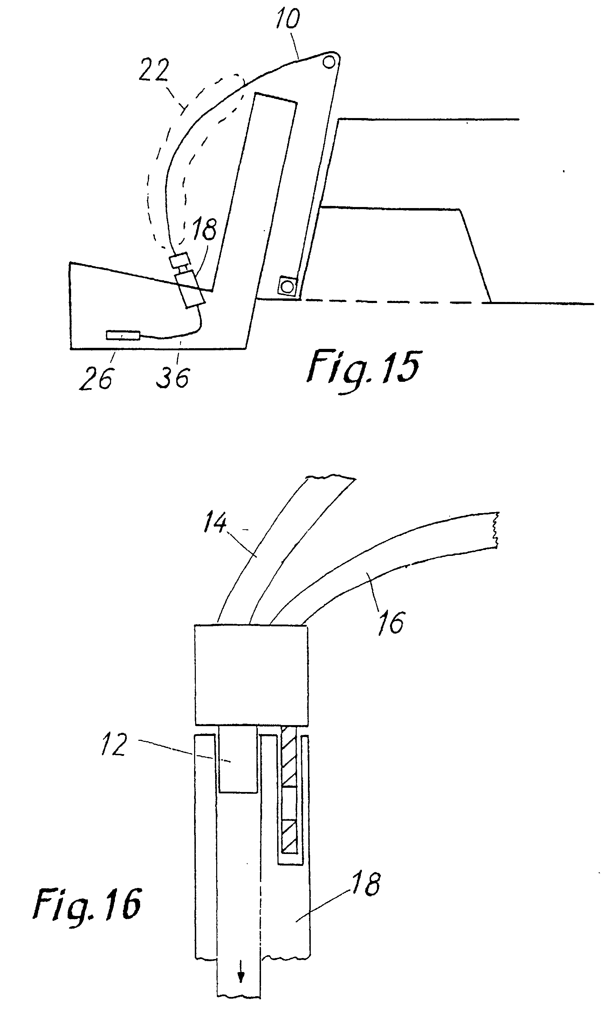

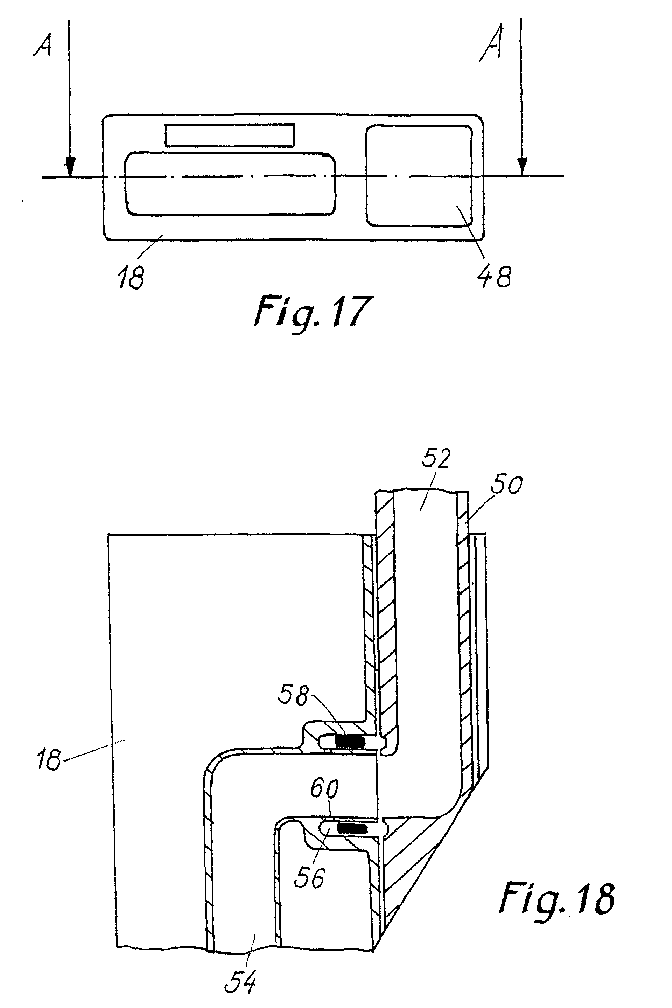

Bei dem in Fig. 15 gezeigten Sicherheitsgurt wird der Luftsack 22 von unten über das Gurtschloß 18 aufgeblasen. Zu diesem Zweck ist der Gasgenerator 26 über einen Gaszuführschlauch 36 mit dem Gurtschloß 18 verbunden. Bei dieser Ausführungsform kann sowohl dem Diagonalbereich 14 als auch dem Horizontalbereich 16 des Gurtbandes ein aufblasbarer Luftsack zugeordnet sein, die beide entweder über einen Bypass oder direkt durch das Gurtschloß 18 aufgeblasen werden können, wie in Fig. 15 gezeigt. In den Fig. 17 und 18 ist eine besonders vorteilhafte Ausbildung einer gasdichten Verbindung zwischen der Bandzunge und dem Gurtschloß gezeigt. Das Gurtschloß 18 ist mit einer Öffnung 48 zur Aufnahme eines hohlen Fortsatzes 50 der Bandzunge 12 versehen. Der Fortsatz 50 der Bandzunge 12 und das Gurtschloß 18 sind jeweils mit einem abgewinkelten Gaskanal 52 bzw. 54 versehen. Wenn die Bandzunge 12 in das Gurtschloß 18 eingesetzt ist, dann stehen die beiden Gaskanäle 52 und 54 miteinander in Verbindung, wie in Fig. 18 gezeigt. Da der Gasübergang vom Gaskanal 54 in den Gaskanal 52 horizontal angeordnet ist, lassen sich Verunreinigungen in diesem Bereich vermeiden. Das Gurtschloß 18 ist im Mündungsbereich des Gaskanals 54 mit einer Ringnut 56 versehen, in die eine zylindrische Dichtung 58 eingesetzt ist. Die Ringnut 56 steht über Radialbohrungen 60 mit dem Gaskanal 54 in Verbindung. Beim Auslösen des Gasgenerators wird die hintere Stirnfläche der Dichtung 58 mit dem Gasdruck beaufschlagt, so daß ihre vordere Stirnfläche gasdicht an eine entsprechende Gegenfläche des Fortsatzes 50 der Bandzunge 12 angedrückt wird. Die Gaskanäle 52 und 54 können zur Reduzierung des Bauraums mit der Verriegelungsmechanik des Gurtschlosses kombiniert werden.

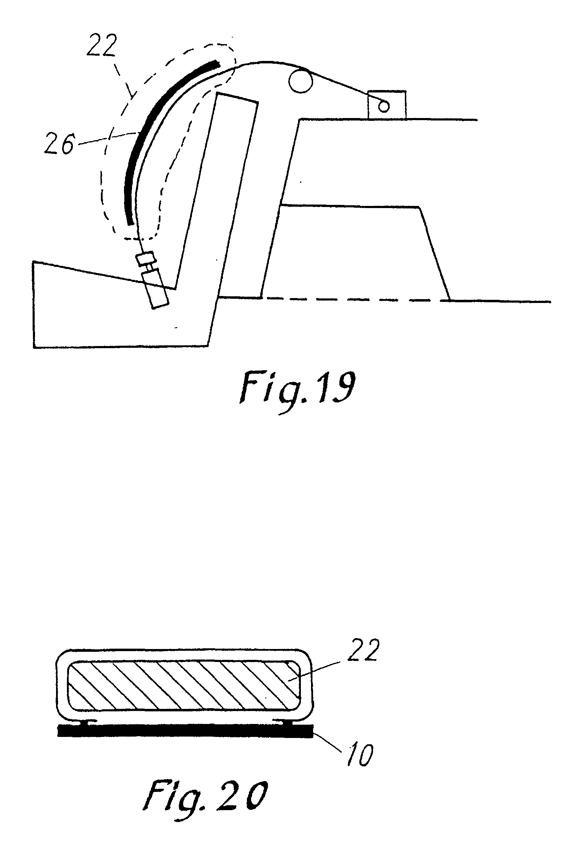

Bei der in Fig. 19 gezeigten Ausführungsform eines aufblasbaren Sicherheitsgurtes ist der Gasgenerator 26 in den Luftsack 22 integriert. Der Gasgenerator 26 besteht aus einem flexiblen Material, das bei einer Aktivierung definiert abbrennt und Gas freisetzt. Diese Ausführungsform hat den Vorteil, daß ein Gaszuführschlauch entbehrlich ist. Ein Insasse kann sich daher im angeschnallten Zustand beliebig weit nach vorne beugen. Ein solcher mit einem integrierten Gasgenerator versehener Luftsack kann auch dem Horizontalbereich des Gurtbandes zugeordnet werden.

Fig. 20 zeigt einen Querschnitt durch das Gurtband 10 und den gefalteten Luftsack 22. Der Luftsack 22 ist mit einem Abdeckband 62 versehen, dessen beide Längsränder mit dem Gurtband 10 verschweißt sind, so daß eine geschlossene Umhüllung entsteht. Durch diese Umhüllung wird der gefaltete Luftsack 22 zentriert und an einer Verdrehung gehindert, und er kann unter Vorspannung eingebaut werden. Wie aus Fig. 20 hervorgeht, sind die beiden verschweißten Längsränder des Abdeckbandes 62 von dem Luftsack 22 verdeckt. Das Abdeckband 62 ist mit einer (nicht gezeigten) definierten Aufreißnaht versehen.

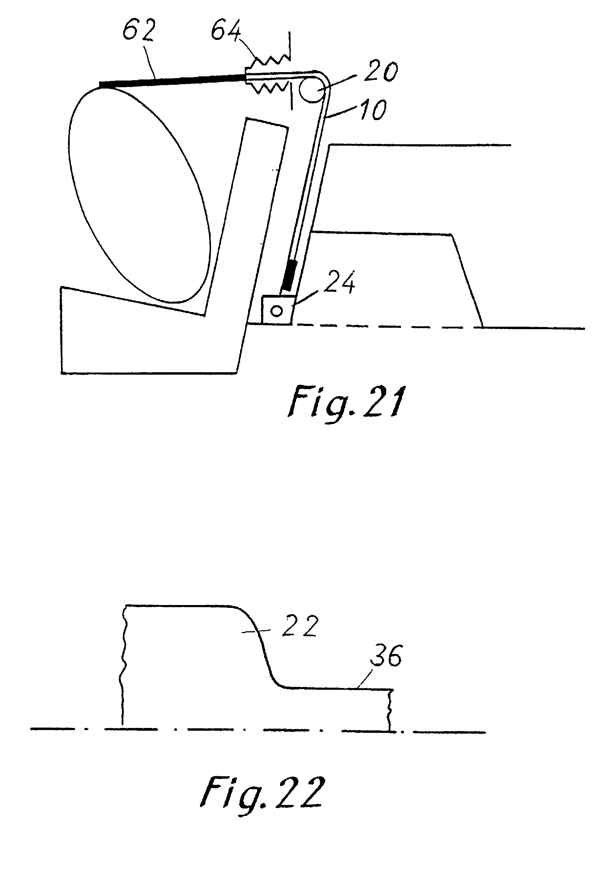

Wenn sich der Insasse nach vorne beugt und den Diagonalbereich des Gurtbandes vom Aufrollautomaten abzieht, dann kann der Fall eintreten, daß ein Bereich des Gurtbandes und gegebenenfalls des Gaszuführschlauches freigelegt wird, der nicht von der Umhüllung bedeckt ist. Um dies zu verhindern, ist, wie in Fig. 21 gezeigt, ein Faltenbalg 64 vorgesehen. Wenn das Ende der Umhüllung beim Abziehen des Gurtbandes 10 vom Aufrollautomaten 24 über den Bandumlenkbeschlag 20 gezogen wird, dann nimmt dieses Ende mit einem (nicht gezeigten) Mechanismus den Faltenbalg 64 mit, der den Gaszuführschlauch ummantelt. Der Gaszuführschlauch ist daher durch den Faltenbalg 64 geschützt.

Der Gaszuführschlauch kann in den Luftsack 22 eingesetzt und mit diesem gasdicht verbunden sein. Eine solche Ausführungsform führt aber beim Abziehen des Gurtbandes zu einem erheblichen Widerstand. Um dies zu umgehen, ist es sinnvoll, den Gaszuführschlauch 36 mit dem Luftsack 22 als einstückiges Bauteil auszuführen, wie in Fig. 22 gezeigt. Der Luftsack 22 und der Gaszuführschlauch 36 können beispielsweise aus einem temperaturbeständigen Material in einem Stück gewebt sein.

### Bezugszeichenliste:

- 10: Gurtband
- 12: Bandzunge
- 14: Diagonalbereich
- 16: Horizontalbereich
- 18: Gurtschloß
- 20: Bandumlenkbeschlag
- 22: Luftsack
- 24: Aufrollautomat
- 26: Gasgenerator
- 28: Führungsschiene
- 30: Spannrolle
- 32: beweglicher Bandumlenkbeschlag
- 34: Umlenkrolle
- 36: Gaszuführschlauch
- 38: Umfangsnut
- 40: Rohr
- 42: Trommel
- 44: Teleskoprohr
- 46: Spiralschlauch
- 48: Öffnung in 18
- 50: Fortsatz von 12
- 52: Gaskanal in 50
- 54: Gaskanal in 18
- 56: Ringnut in 18
- 58: Dichtung
- 60: Bohrung
- 62: Abdeckband
- 64: Faltenbalg

## Patentansprüche

1. Aufblasbarer Sicherheitsgurt für Kraftfahrzeuge, bestehend aus einem Gurtband (10), das durch eine Bandzunge (12) in einen am Oberkörper eines Insassen anlegbaren Diagonalbereich (14) und in einen am Becken des Insassen anlegbaren Horizontalbereich (16) unterteilt ist und dessen beide Enden mit dem Fahrzeug Verbindbar sind, wobei das Gurtband (10) mit der Bandzunge (12) durch einen Verschluß mit definierter Haltekraft derart verbunden ist, daß bei einem Aufprall des Fahrzeugs der Verschluß freigegeben wird, einem am Fährzeug befestigbaren Gurtschloß (18), mit dem die Bandzunge lösbar verbindbar ist, einem am Fahrzeug befestigtbaren ersten Aufrollautomaten (24), mit dem der Diagonalbereich des Gurtbandes verbunden ist, einem am Fahrzeug befestigbaren zweiten Aufrollautomaten, mit dem der Horizontalbereich des Gurtbandes verbunden ist, und einem an dem Diagonalbereich des Gurtbandes befestigten Luftsack (22), der sich im angelegten Zustand vom Oberkörper des Insassen bis hinter den Kopf erstreckt, wobei der Luftsack aus einem Material besteht, das sich beim Aufblasen in Axialrichtung verkürzt, **dadurch gekennzeichnet, daß** der als Klemmverschluß ausgebildete Verschluß und der erste Aufrollautomat (24), mit dem der Diagonalbereich (14) des Gurtbandes (10) verbunden ist, elektrisch gesteuert sind, derart, daß zunächst sowohl der erste Aufrollautomat als auch der Klemmverschluß freigegeben sind, daß der erste Aufrollautomat nach Abziehen einer definierten Länge des Gurtbandes (10) gesperrt wird, daß nach dem Einsetzen der Bandzunge (12) in das Gurtschloß (18) der Klemmverschluß gesperrt und der erste Aufrollautomat freigegeben wird.

2. Aufblasbarer Sicherheitsgurt nach Anspruch 1, **dadurch gekennzeichnet, daß** der mit dem Luftsack (22) verbundene Gasgenerator bei einem Aufprall des Fahrzeugs auch dann aktiviert wird, wenn die Bandzunge (12) nicht in das Gurtschloß (18) eingesetzt ist.

3. Aufblasbarer Sicherheitsgurt nach Anspruch 2, **gekennzeichnet durch** ein Kindersitz-Erkennungssystem, das bei erkanntem Kindersitz den oberen Aufrollautomaten sperrt und eine Auslösung des Gasgenerators verhindert.

4. Aufblasbarer Sicherheitsgurt nach einem der vorhergehenden Ansprüche, **dadurch gekennzeichnet, daß** der Gasgenerator (26) über einen Gaszuführschlauch (36) mit dem Ende des Diagonalbereichs (14) des Gurtbandes (10) verbunden ist.

5. Aufblasbarer Sicherheitsgurt nach Anspruch 4, **dadurch gekennzeichnet, daß** der Gaszuführschlauch (36) in das Gurtband (10) integriert ist.

6. Aufblasbarer Sicherheitsgurt nach Anspruch 8, **dadurch gekennzeichnet, daß** der Gasgenerator (26) mit dem Gurtband (10) fest verbunden und auf einer am Fahrzeug befestigten Führungsschiene (28) geführt ist.

7. Aufblasbarer Sicherheitsgurt nach Anspruch 5, **dadurch gekennzeichnet, daß** der Gasgenerator (26) am Fahrzeug befestigt ist und daß das Gurtband (10) um eine beweglich gelagerte Spannrolle (30) herumgelegt ist.

8. Aufblasbarer Sicherheitsgurt nach Anspruch 4, **dadurch gekennzeichnet, daß** der Gasgenerator (26) mit dem Fahrzeug fest verbunden und über einen gesonderten Gaszuführschlauch (36) mit dem Luftsack (22) verbunden ist, wobei der Gaszuführschlauch eine Veränderung des Abstandes zwischen dem oberen Ende des Luftsackes (22) und dem Gasgenerator (26) ermöglicht.

9. Aufblasbarer Sicherheitsgurt nach einem der Ansprüche 1 bis 3, **dadurch gekennzeichnet, daß** der Gasgenerator (26) über das Gurtschloß (18) und die Bandzunge (12) mit dem unteren Ende des Luftsackes (22) verbunden ist.

10. Aufblasbarer Sicherheitsgurt nach einem der Ansprüche 1 bis 3, **dadurch gekennzeichnet, daß** der Gasgenerator (26) in den Luftsack (22) integriert ist.

11. Aufblasbarer Sicherheitsgurt nach einem der Ansprüche 4 bis 7, **dadurch gekennzeichnet, daß** der Gaszuführschlauch (36) in die neutrale Faser des Gurtbandes (10) gelegt ist.

12. Aufblasbarer Sicherheitsgurt nach Anspruch 11, **dadurch gekennzeichnet, daß** eine Rolle (30; 32; 34), um die das Gurtband (10) herumgeführt ist, eine an das Profil des Gaszuführschlauches (36) angepaßte Umfangsnut (38) aufweist.

13. Aufblasbarer Sicherheitsgurt nach Anspruch 11, **dadurch gekennzeichnet, daß** der Gaszuführschlauch (36) ein flaches Profil hat.

14. Aufblasbarer Sicherheitsgurt nach Anspruch 13, **dadurch gekennzeichnet, daß** der Gaszuführschlauch aus mehreren nebeneinander liegenden einzelnen Schläuchen (36a, 36b, 36c) besteht.

15. Aufblasbarer Sicherheitsgurt nach Anspruch 9, **dadurch gekennzeichnet, daß** in dem Gurtschloß (18) unter der eingesetzten Gurtzunge (12) ein waagerechter Gasübergang vorgesehen ist.

16. Aufblasbarer Sicherheitsgurt nach Anspruch 15, **dadurch gekennzeichnet, daß** dem Gasübergang eine Dichtung (58) zugeordnet ist, die unter dem Druck des Gasstromes an einer Dichtfläche zur Anlage gelangt.

17. Aufblasbarer Sicherheitsgurt nach einem der vorhergehenden Ansprüche, **dadurch gekennzeichnet, daß** der Luftsack (22) im gefalteten Zustand von einer Umhüllung umgeben ist.

18. Aufblasbarer Sicherheitsgurt nach Anspruch 17, **dadurch gekennzeichnet, daß** die Umhüllung aus dem Gurtband (10) und aus einem Abdeckband (62) besteht, dessen vom Luftsack (22) verdeckte Längsränder mit dem Gurtband verschweißt sind.

19. Aufblasbarer Sicherheitsgurt nach Anspruch 18, **dadurch gekennzeichnet, daß** das vom Luftsack (22) abgekehrte hintere Ende der Umhüllung mit einem den Gaszuführschlauch (36) ummantelnden Faltenbalg (64) verbunden ist.

20. Aufblasbarer Sicherheitsgurt nach einem der vorhergehenden Ansprüche, **dadurch gekennzeichnet, daß** der Gaszuführschlauch (36) und der Luftsack (22) einstückig gewebt sind.

## Claims

1. Inflatable seat belt for motor vehicles, consisting of a belt strap (10), which is devided by means of a belt latch (12) into a diagonal region (14) restable against an occupant's upper body and into a horizontal region (16) restable against the occupant's pelvis, and whose two ends are connectable with the vehicle, the belt strap (10) being connected with the belt latch (12) by a fastener of a defined holding force such that, in the event of an impact of the vehicle, the fastener will be released, of a belt buckle (18), fastenable to the vehicle with which the belt latch can be detachably connected, of a first retractor (24) fastenable to the vehicle with which the diagonal region of the belt strap is connected, of a second retractor fastenable to the vehicle with which the horizontal region of the belt strap is connected, and of an air bag (22) fastened to the diagonal region of the belt strap, which air bag extends from the occupant's upper body to behind the head when the belt is put on, the air bag consisting of a material which, during the inflating, is shortened in the axial direction, **characterized in that** the fastener being contructed as a clamping fastener and the first retractor (24) with which the diagonal region (14) of the belt strap (10) is connected, are electrically controlled such that the first retractor as well as the clamping fastener are released, that, after the withdrawal of a defined length of the belt strap (10), the first retractor is locked, that, after the insertion of the belt latch (12) into the belt buckle (18), the clamping fastener will be locked and the first retractor will be released.

2. Inflatable seat belt according to Claim 1,
**characterized in that** the gas generator connected with the air bag (22) in the event of an impact of the vehicle will also be activated when the belt latch (12) is not inserted in the belt buckle (18).

3. Inflatable seat belt according to Claim 2,
**characterized by** a child seat detection system which, when a child seat is detected, locks the upper retractor and prevents a triggering of the gas generator.

4. Inflatable seat belt according to one of the preceding claims,
**characterized in that** the gas generator (26) is connected by way of a gas feeding hose (36) with the end of the diagonal region (14) of the belt strap (10).

5. Inflatable seat belt according to Claim 4,
**characterized in that** the gas feeding hose (36) is integrated in the belt strap (10).

6. Inflatable seat belt according to Claim 8,
**characterized in that** the gas generator (26) is firmly connected with the belt strap (10) and is guided on a guide rail (28) fastened to the vehicle.

7. Inflatable seat belt according to Claim 5,
**characterized in that** the gas generator (26) is connected with the vehicle, and **in that** the belt strap (10) is placed around a movably disposed tension roller (30).

8. Inflatable seat belt according to Claim 4,
**characterized in that** the gas generator (26) is firmly connected with the vehicle and by way of a separate gas feeding hose (36) is connected with the air bag (22), the gas feeding hose permitting a change of the distance between the upper end of the air bag (22) and the gas generator (26).

9. Inflatable seat belt according to one of Claims 1 to 3,
**characterized in that** the gas generator (26) is connected by way of the belt buckle (8) and the belt latch (12) with the lower end of the air bag (22).

10. Inflatable seat belt according to one of Claims 1 to 3,
**characterized in that** the gas generator (26) is integrated in the air bag (22).

11. Inflatable seat belt according to one of Claims 4 to 7,
**characterized in that** the gas feeding hose (36) is placed into the neutral fiber of the belt strap (10).

12. Inflatable seat belt according to Claim 11,
**characterized in that** a roller (30; 32; 34), around which the belt strap (10) is guided, has a circumferential groove (38) adapted to the profile of the gas feeding hose (36).

13. Inflatable seat belt according to Claim 11,
**characterized in that** the gas feeding hose (36) has a flat profile.

14. Inflatable seat belt according to Claim 13,
**characterized in that** the gas feeding hose consists of several individual hoses (36a, 36b, 36c) situated side-by-side.

15. Inflatable seat belt according to Claim 9,
**characterized in that** a horizontal gas transition is provided in the belt buckle (18) below the inserted belt latch (12).

16. Inflatable seat belt according to Claim 15,
**characterized in that** a seal (58) is assigned to the gas transition which, under the pressure of the gas flow, comes to rest on a sealing surface.

17. Inflatable seat belt according to one of the preceding claims,
**characterized in that**, in the folded condition, the air bag (22) is surrounded by an envelope.

18. Inflatable seat belt according to Claim 17,
**characterized in that** the envelope consists of the belt strap (10) and of a cover band (62) whose longitudinal edges covered by the air bag (22) are welded to the belt strap.

19. Inflatable seat belt according to Claim 18,
**characterized in that** the rearward end of the envelope facing away from the air bag (22) is connected with expansion bellows (64) surrounding the gas feeding hose (36).

20. Inflatable seat belt according to one of the preceding claims,
**characterized in that** the gas feeding hose (36) and the air bag (22) are woven in one piece.

## Revendications

1. Ceinture de sécurité gonflable pour véhicules automobiles, composée d'une sangle de ceinture (10) qui est divisée, par une boucle pour sangle (12), en une zone en diagonale (14) positionnable sur le torse d'un occupant et en une zone horizontale (16) positionnable sur le bassin d'un occupant, et dont les deux extrémités peuvent être reliées au véhicule, la sangle de ceinture (10) étant reliée à la boucle pour sangle (12) par une fermeture d'une résistance définie, de telle sorte que la fermeture est libérée lors d'une collision du véhicule, d'un ancrage de ceinture (18) qui peut être fixé au véhicule, et auquel la langue de sangle peut être reliée de façon détachable, d'un premier rétracteur automatique (24) qui peut être fixé au véhicule et auquel la zone en diagonale de la sangle de ceinture est reliée, d'un deuxième rétracteur automatique qui peut être fixé au véhicule et auquel la zone horizontale de la sangle de ceinture est reliée, et d'un coussin d'air (22) fixé sur la zone en diagonale de la sangle de ceinture , lequel coussin s'étend du torse de l'occupant jusqu'à l'arrière de la tête, et est composé d'un matériau qui, lors du gonflage, se rétrécit en direction axiale, **caractérisée en ce que** la fermeture, formée comme fermeture à pince, et le premier rétracteur automatique (24), auquel est reliée la zone en diagonale (14) de la sangle de ceinture (10), sont commandés électriquement, de telle sorte que le premier rétracteur automatique ainsi que la fermeture à pince sont tout d'abord libérés, que le premier rétracteur automatique est bloqué dès qu'une longueur définie de la sangle de ceinture (10) est déroulée, qu'après la mise en place de la boucle pour sangle (12) dans l'ancrage de ceinture (18), la fermeture à pince est bloquée et le premier rétracteur automatique est libéré.

2. Ceinture de sécurité gonflable selon la revendication 1, **caractérisée en ce que** le générateur de gaz relié au coussin d'air (22) est activé lors d'une collision du véhicule même lorsque la boucle pour sangle (12) n'est pas en place dans l'ancrage de ceinture (18).

3. Ceinture de sécurité gonflable selon la revendication 2, **caractérisée par** un système de reconnaissance de la présence d'un siège pour enfant qui bloque le rétracteur automatique supérieur et empêche le déclenchement du générateur de gaz lorsque le siège pour enfant a été reconnu.

4. Ceinture de sécurité gonflable selon l'une quelconque des revendications précédentes, **caractérisée en ce que** le générateur de gaz (26) est relié à l'extrémité de la zone en diagonale (14) de la sangle de ceinture (10) par un tuyau d'alimentation de gaz (36).

5. Ceinture de sécurité gonflable selon la revendication 4, **caractérisée en ce que** le tuyau d'alimentation de gaz (36) s'intègre dans la sangle de ceinture (10).

6. Ceinture de sécurité gonflable selon la revendication 8, **caractérisée en ce que** le générateur de gaz (26) est solidaire de la sangle de ceinture (10) et est guidé sur un rail de guidage (28) fixé sur le véhicule.

7. Ceinture de sécurité gonflable selon la revendication 5, **caractérisée en ce que** le générateur de gaz (26) est fixé sur le véhicule et **en ce que** la sangle de ceinture (10) est positionnée autour d'un galet tendeur (30) fixé de façon mobile.

8. Ceinture de sécurité gonflable selon la revendication 4, **caractérisée en ce que** le générateur de gaz (26) est solidaire du véhicule et est relié au coussin d'air (22) par un tuyau d'alimentation de gaz (36) spécial, le tuyau d'alimentation de gaz permettant une modification de la distance entre l'extrémité supérieure du coussin d'air (22) et le générateur de gaz (26).

9. Ceinture de sécurité gonflable selon l'une quelconque des revendications 1 à 3, **caractérisée en ce que** le générateur de gaz (26) est relié à l'extrémité inférieure du coussin d'air (22) par l'ancrage de ceinture (18) et la boucle pour sangle (12).

10. Ceinture de sécurité gonflable selon l'une quelconque des revendications 1 à 3, **caractérisée en ce que** le générateur de gaz (26) s'intègre dans le coussin d'air (22).

11. Ceinture de sécurité gonflable selon l'une quelconque des revendications 4 à 7, **caractérisée en ce que** le tuyau d'alimentation de gaz (36) se positionne dans la fibre neutre de la sangle de ceinture (10).

12. Ceinture de sécurité gonflable selon la revendication 11, **caractérisée en ce qu'**un rouleau (30 ; 32 ; 34) autour duquel la sangle de ceinture (10) est guidée, présente une rainure circonférentielle (38) adaptée au profil du tuyau d'alimentation de gaz (36).

13. Ceinture de sécurité gonflable selon la revendication 11, **caractérisée en ce que** le tuyau d'alimentation de gaz (36) a un profil plat.

14. Ceinture de sécurité gonflable selon la revendication 13, **caractérisée en ce que** le tuyau d'alimentation de gaz consiste en plusieurs tuyaux isolés (36a, 36b, 36c) placés les uns à côté des autres.

15. Ceinture de sécurité gonflable selon la revendication 9, **caractérisée en ce que** dans l'ancrage de ceinture (18), sous la boucle pour sangle (12) enclenchée, est prévu un passage horizontal pour le gaz.

16. Ceinture de sécurité gonflable selon la revendication 15, **caractérisée en ce qu'**est associé, au passage pour le gaz, un joint (58) qui, sous la pression du flux de gaz, vient se plaquer sur une surface d'étanchéité.

17. Ceinture de sécurité gonflable selon l'une quelconque des revendications précédentes, **caractérisée en ce que** le coussin d'air (22) en état plié est entouré d'une enveloppe.

18. Ceinture de sécurité gonflable selon la revendication 17, **caractérisée en ce que** l'enveloppe consiste en la sangle de ceinture (10) et en une bande de couverture (62) dont les bords longitudinaux cachés par le coussin d'air (22) sont soudés avec la sangle de ceinture .

19. Ceinture de sécurité gonflable selon la revendication 18, **caractérisée en ce que** l'extrémité arrière de l'enveloppe détournée du coussin d'air (22) est reliée à un soufflet en accordéon (64) qui habille le tuyau d'alimentation de gaz (36).

20. Ceinture de sécurité gonflable selon l'une quelconque des revendications précédentes, **caractérisée en ce que** le tuyau d'alimentation de gaz (36) et le coussin d'air (22) sont tissés en une pièce.
